# EUROPÄISCHE PATENTSCHRIFT

(11) **EP 0 858 692 B1**
(45) Veröffentlichungstag und Bekanntmachung des Hinweises auf die Patenterteilung: **16.08.2001**
(21) Anmeldenummer: 97921519.1
(22) Anmeldetag: 20.05.1997
(51) Int. Cl.: H02K 15/14, H02K 5/20, H02K 9/19

(54) **FLÜSSIGKEITSKÜHLUNG FÜR ELEKTRISCHE MASCHINEN**
LIQUID COOLING SYSTEM FOR ELECTRICAL MACHINES
SYSTEME DE REFROIDISSEMENT A LIQUIDE POUR MOTEURS ELECTRIQUES

(30) Priorität: 20.05.1996 AT 89196
(43) Veröffentlichungstag der Anmeldung: 19.08.1998
(73) Patentinhaber: DaimlerChrysler AG, 70567 Stuttgart (DE)
(72) Erfinder: NEUDORFER, Harald Dipl.-Ing., A-2514 Traiskirchen (AT); GUKENBIEHL, Karl, Ludwig, A-2371 Hinterbrühl (AT)
(74) Vertreter: Köhler-Pavlik, Johann, Dipl.-Ing.
(86) Internationale Anmeldenummer: AT9700103
(87) Internationale Veröffentlichungsnummer: WO9744882

(56) Entgegenhaltungen:
- EP-A- 0 585 644
- DE-A- 2 507 846
- GB-A- 818 443

## Beschreibung

Die Erfindung betrifft eine Flüssigkeitskühlung für elektrische Maschinen mit einem Gehäuse nach dem Oberbegriff des Patentanspruches 1.

Bekannte Gehäuse elektrischer Maschinen werden durch einen um den Stator der Maschine angeordneten Stahlmantel gebildet, auf welchem Leisten zur Verstärkung aufgeschweißt sind. Gehäuse aus Stahl besitzen sehr hohes Gewicht und nur geringe Korrosionsbeständigkeit. Darüberhinaus ist die Wärmeleitung von Stahl nicht sehr hoch. Auf den Stirnflächen des Stahlmantels werden die Lagerschilder aufgeschraubt. Diese Lagerschilder enthalten die Lager, über welche die Rotorwelle der Maschine drehbar gelagert wird. Das Aufschrauben der Lagerschilder erhöht den Montageaufwand und somit auch die Herstellungskosten. Ebenso können die Reparaturkosten durch etwaige Verschleißteile steigen.

Die US 5 084 642 beschreibt eine flüssigkeitsgekühlte, elektrische Maschine, bei der im Gehäusemantel Kühlkanäle angeordnet sind, welche mit dem Gehäuse in einem Arbeitsgang durch Gießen hergestellt sind. Die Kühlkanäle besitzen jedoch keine Auskleidung, welche durch Rohre gebildet ist. Die AT E 33 217 beschreibt ein Gußverfahren zur Herstellung länglicher Kanäle in Gußteilen, die durch Einlegen eines länglichen, festen Elementes vor dem Guß erzeugt werden. Die länglichen Elemente können als Rohre ausgebildet sein, die als Platzhalter zur Herstellung der Kanäle dienen. Flüssigkeitsgekühlte elektrische Maschinen mit im Gehäuse angeordneten Kühlkanälen sind auch aus der EP 560 993, der WO 92/12932, der US 4 865 112 oder der DE 31 30 515 bekannt. Die EP 110 234 beschreibt ein Gußwerkstück mit eingeformtem Kanal. Durch Sintern hergestellte Körper mit integrierten Hohlräumen werden beispielsweise in der US 4 999 156 oder der SU 1052-336-A vorbeschrieben.

Die GB 818 443 beschreibt eine elektrische Maschine mit einem gekühlten Statorgehäuse in Kombination mit einer Wellenkühlung, bei der die Kühlkanäle durch Rohre gebildet werden, welche mit dem Gehäuse in einem Arbeitsvorgang durch Gießen hergestellt werden. Der Herstellungsaufwand der Maschine ist relativ hoch.

Die DE 25 07 846 A1 zeigt eine Kühlvorrichtung für ein abgedichtetes Antriebsaggregat, bei der das Statorgehäuse Kühlkanäle enthält, in welchen das Kühlmedium, vorzugsweise Öl, transportiert wird. Um die Wärme vom Motor zu anderen Teilen zu transportieren, sind die um den Motor angeordneten Kühlschlangen mit an anderen Teilen des Antriebsaggeregats angebrachten Kühlschlangen verbunden.

Aufgabe der vorliegenden Erfindung ist die Schaffung einer wirkungsvollen Flüssigkeitskühlung einer elektrischen Maschine und die Erzielung einer Leistungssteigerung gegenüber baugleichen Maschinen gleicher Größe unter Vermeidung der oben erwähnten Nachteile bekannter Systeme.

Die Aufgabe wird erfindungsgemäß durch die Maßnahme nach dem kennzeichnenden Teil des Patentanspruches 1 gelöst. Dadurch, daß die Kühlkanäle mit dem Gehäuse in einem Arbeitsvorgang hergestellt werden, ist keine nachträgliche Bohr- oder Fräsbearbeitung der Kühlkanäle notwendig. Somit können Aufwand und Kosten bei der Fertigung reduziert werden. Die Kühlkanäle im Mantel des Gehäuses garantieren eine optimale Kühlung der elektrischen Maschine, wodurch eine größere Leistungsausbeute erzielt werden kann. Hierbei ist das Gießen ein sehr wirtschaftliches und in der Motorherstellung übliches Fertigungsverfahren, bei dem die Rohre, welche die Kühlkanäle bilden, in der Gußform plaziert und vorgewärmt werden, worauf das Gehäuse der Maschine um die Rohre gegossen wird. Alternativ zum Gießen ist auch Sintern zur Herstellung des Gehäuses möglich. Beim Sintern wird ein Granulat des Materials mit bestimmter Temperatur und bestimmtem Druck in eine Form gepreßt. Sintern hat gegenüber Gießen den Vorteil, daß auch andere Materialien verwendet werden können.

Durch die Integration eines Lagerschildes und die Anordnung eines Kühlkanals im Lagerschild können der Montageaufwand und in der Folge die Herstellungskosten der elektrischen Maschine reduziert werden und eine Flüssigkeitskühlung ohne Dichtungen ist möglich. Somit werden durch die Konstruktion Verschleißteile, wie Dichtungsringe vermieden und dadurch die Störanfälligkeit verringert. Die Herstellung des Kühlkanals und des Gehäuses in einem Arbeitsvorgang reduziert, wie bereits oben erwähnt, den Aufwand und die Kosten erheblich.

Durch die Merkmale gemäß Patentanspruch 2 wird durch eine entsprechende Kommunikation zwischen den Kühlkanälen eine gleichmäßige effiziente Kühlung des Gehäuses der elektrischen Maschine erzielt.

Vorzugsweise ist gemäß Patentanspruch 3 im Lagerschild ein ringförmiger Kühlkanal um das Lager angeordnet.

Besonders vorteilhaft ist die Konstruktion gemäß Patentanspruch 4, bei der ein Teil der Kühlflüssigkeit durch den parallel zu dem durch die Kühlkanäle gebildeten Kreislauf auch durch den ringförmigen Kanal zur Kühlung des Lagers strömt.

Gemäß Patentanspruch 5 wird durch die Verbindung des Rohres mit einem Lagerring, der zur Verstärkung des Lagerschildes im Lagerbereich dient, auch deren richtige Lage beim Herstellungsprozeß des Gehäuses, wie z.B. beim Gießvorgang gesichert.

Durch das Merkmal nach Patentanspruch 6 wird eine verbesserte Kühlung der Luft im Inneren des Gehäuses erzielt, da die rotierende, elektrische Maschine im Inneren des Gehäuses eine Luftströmung erzeugt.

Durch die Konstruktion nach Patentanspruch 7 kann die durch die rotierende elektrische Maschine hervorgerufene Luftströmung gezielt über die Kühlrippen geführt werden und die Wärmeabgabe gesteigert werden.

Der obengenannte Vorteil wird auch bei der Ausführungsform gemäß Patentanspruch 8 erzielt.

Die Fertigung des erfindungsgemäßen Gehäuses kann durch die Maßnahme nach Patentanspruch 9 weiter optimiert werden.

In der nachfolgenden Beschreibung werden die Erfindungsmerkmale anhand eines bevorzugten Gehäuses eines Elektromotors, insbesondere eines Traktionsmotors unter Bezugnahme auf die beigefügten Zeichnungen erklärt.

Darin zeigen
Fig. 1 einen Längsschnitt durch das erfindungsgemäße Gußgehäuse eines Elektromotors,
Fig. 2 das Gehäuse im Querschnitt längs der Schnittlinie II-II aus Fig. 1,
Fig. 3 eine Seitenansicht des Gehäuses aus Fig. 1 von links,
Fig. 4 eine Seitenansicht des Gehäuses aus Fig. 1 von rechts,
Fig. 5 einen Ring zum Verschluß des Ringkanals des Gehäuses auf der linken Seite,
Fig. 6 einen Ring zum Verschluß des Ringkanals des Gehäuses auf der rechten Seite, und
Fig. 7 eine Ausführungsform des erfindungsgemäßen Stahlrohres zur Führung der Kühlflüssigkeit zur Kühlung der Lager der Maschine samt Stahlring zur Verstärkung des Lagerschildes im Lagerbereich in der Ansicht von vorne sowie im Schnittbild.

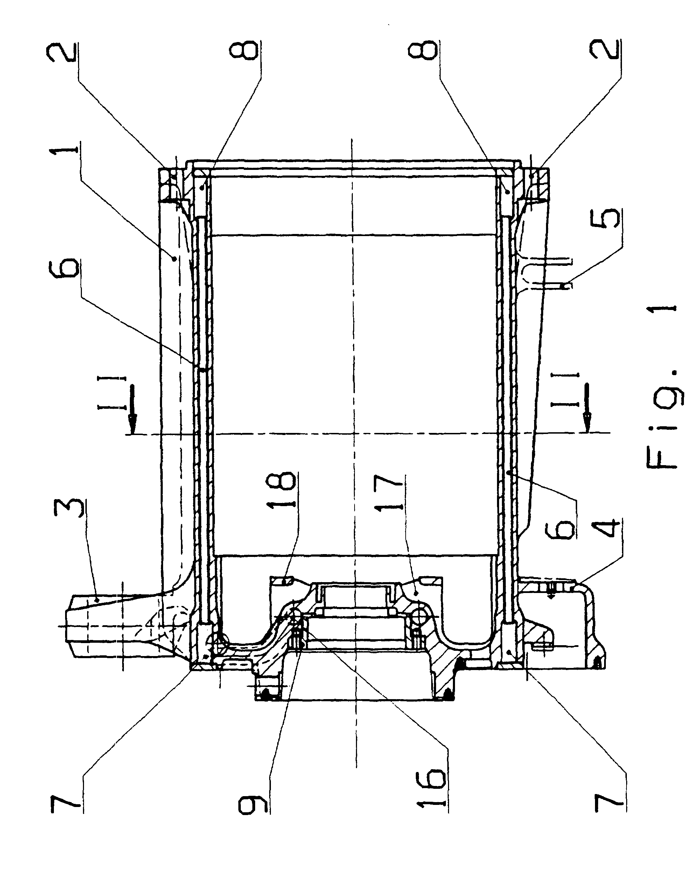

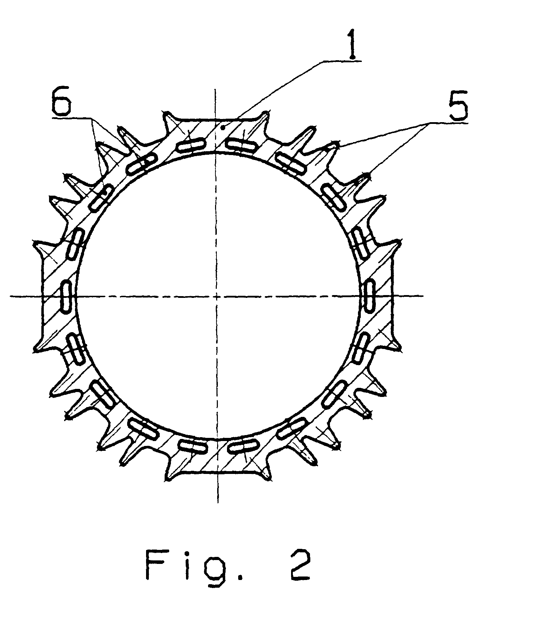

Fig. 1 zeigt ein Gehäuse 1 für einen Elektromotor im Schnitt. Vorzugsweise werden Gehäuse dieser Art durch Gießen hergestellt. Alternativ dazu kann die Herstellung auch durch Sintern erfolgen. Die Verwendung von Aluminium bzw. Aluminium-Legierungen für das Gehäuse bietet eine Reihe von Vorteilen gegenüber dem Einsatz von Stahl. Neben einem geringerem Gewicht gegenüber Stahl weist Aluminium eine höhere Korrosionsbeständigkeit, eine bessere Wärmeleitfähigkeit und eine leichtere Bearbeitbarkeit auf. In das Gehäuse 1 wird die elektrische Maschine eingebracht, deren Welle über zwei Lager zentriert gehalten wird. Im gezeigten Beispiel ist das linke Lagerschild im Gehäuse integriert und mit diesem in einem Arbeitsvorgang, vorzugsweise Gießvorgang, hergestellt. Das Lagerschild weist einen Ring 9 auf, in dem das Lager für die Rotorwelle des elektrischen Motors angeordnet wird. Das zweite Lagerschild bzw. die Aufhängung zum Getriebe (nicht dargestellt) wird über Schrauben und vorgesehene Bohrungen 2 im Gehäuse 1 bewerkstelligt. Eine Ausformung des Gehäuses bildet die Motoraufhängung 3, eine weitere bildet den Klemmenkasten 4 in dem sich die elektrischen Anschlüsse der Maschine befinden. Außen am Gehäuse 1 sind zur Erhöhung der Steifigkeit des Gehäuses 1 und zur Vergrößerung der Oberfläche für eine bessere Abführung der Wärme Kühlrippen 5 angeordnet. Die Kühlkanäle 6 werden erfindungsgemäß durch Rohre aus einem Material mit höherem Schmelzpunkt als das Material des Gehäuses 1 gebildet. Die vorzugsweise aus Stahl oder Stahl-Legierungen bestehenden Rohre werden in die Gußform eingelegt, vorgewärmt und danach das Aluminium um diese zur Bildung des Gehäuses 1 gegossen. Das Material der die Kühlkanäle 6 bildenen Rohre ist allerdings nicht auf Stahl oder Stahl-Legierungen beschränkt sondern allgemein auf Materialien mit höherem Schmelzpunkt als das Material des Gehäuses 1. Ebenso kann der Querschnitt der Rohre im wesentlichen beliebig sein. In der dargestellten Ausführungsform weisen die Kühlkanäle ovalen Querschnitt auf (siehe Fig. 2 bis Fig. 4). Die Kühlkanäle 6 müssen nicht achsparallel und konzentrisch angeordnet sein, sondern können auch im Querschnitt versetzt und nicht achsparallel sein. Die Kühlkanäle 6 enden auf der linken Seite in Ringkanalsegmenten 7 und auf der rechten Seite in Ringkanalsegmenten 8.

In der Schnittbilddarstellung des Gehäuses 1 (Fig. 2) sind die Kühlrippen 5 und die ovalen Kühlkanäle 6, welche in dieser Ausführungsform achsparallel und konzentrisch angeordnet sind, deutlich erkennbar. Die Kühlrippen 5 sind im gezeigten Beispiel für ein viergeteiltes Gußmodell günstig angeordnet, können aber prinzipiell beliebige Gestalt aufweisen.

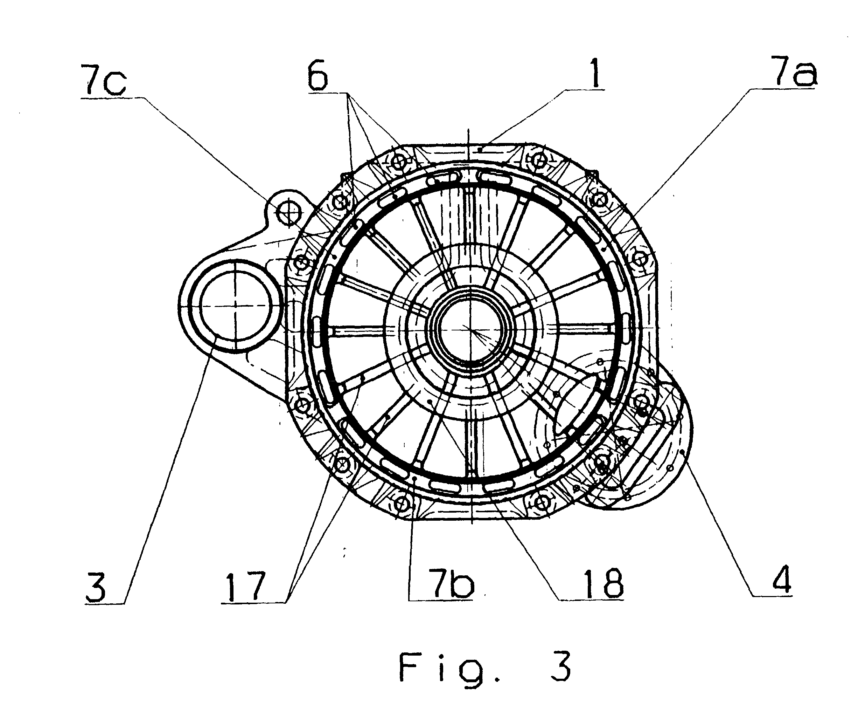

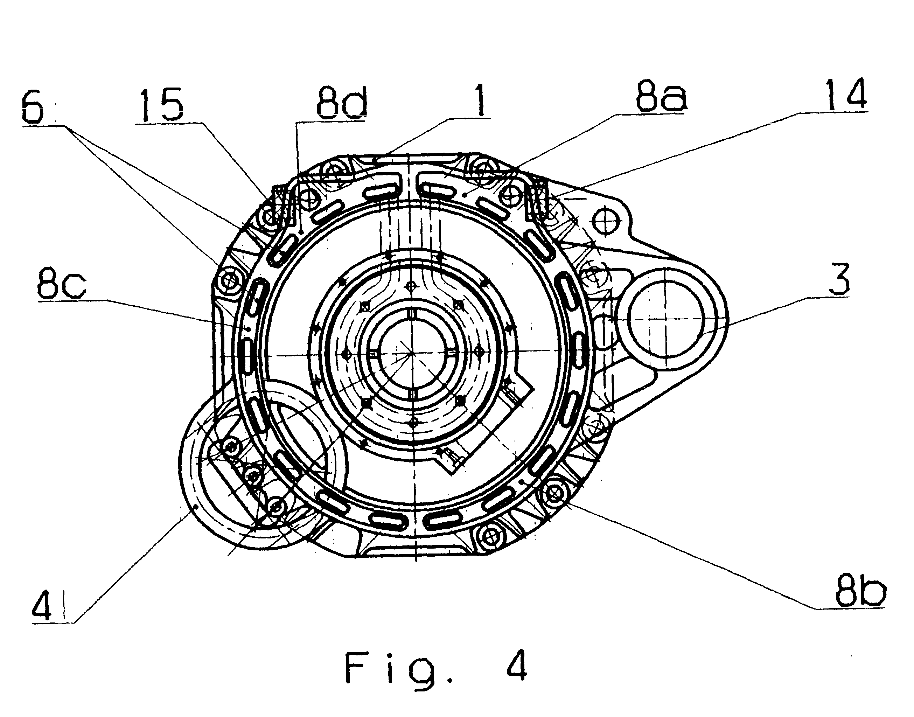

In der Seitenansichten des Gehäuses 1 aus Fig. 3 sieht man die im dargestellten Ausführungsbeispiel drei Ringkanalsegmente 7a, 7b, 7c in welche die Kühlkanäle 6 auf der einen Seite münden. In diesem Beispiel sind die Kühlkanäle 6 in regelmäßigen Winkelabständen von 20° angeordnet, von denen jeweils sechs nebeneinanderliegende Kühlkanäle 6 in jeweils einem der drei Ringkanalsegmente 7a, 7b, 7c münden. Auf der gegenüberliegenden Seite des Motors (Fig. 4) münden die Kühlkanäle in unterschiedlich angeordneten Ringkanalsegmenten 8a, 8b, 8c, 8d. Dabei münden die im Uhrzeigersinn gesehen ersten drei Kühlkanäle 6 im Ringkanalsegment 8a, die darauffolgenden sechs Kühlkanäle 6 im Ringkanalsegment 8b, die darauffolgenden sechs Kühlkanäle 6 im Ringkanalsegment 8c und die letzten drei Kühlkanäle 6 schließlich im Ringkanalsegment 8d. Im gezeigten Beispiel strömt die Kühlflüssigkeit über das Ringkanalsegment 8a ein und fließt durch die im Uhrzeigersinn gesehenen ersten drei Kühlkanäle 6 in Richtung zum Ringkanalsegment 7c auf der gegenüberliegenden Seite des Gehäuses 1, wird dort in die darauffolgenden drei Kühlkanäle 6 umgelenkt und strömt wieder an die andere Seite des Gehäuses 1 zurück in das Ringkanalsegment 8b, durch welchen die Kühlflüssigkeit in die darauffolgenden drei Kühlkanäle geleitet wird usw. Die Kühlflüssigkeit strömt im wesentlichen mäanderformig durch das Gehäuse 1 und garantiert eine optimale Kühlung desselben. Natürlich handelt es sich bei dem dargestellten Motorgehäuse nur um ein Beispiel der Führung der Kühlflüssigkeit. Es können z.B. auch jeweils nur zwei Kühlkanäle in einem Ringkanalsegment münden.

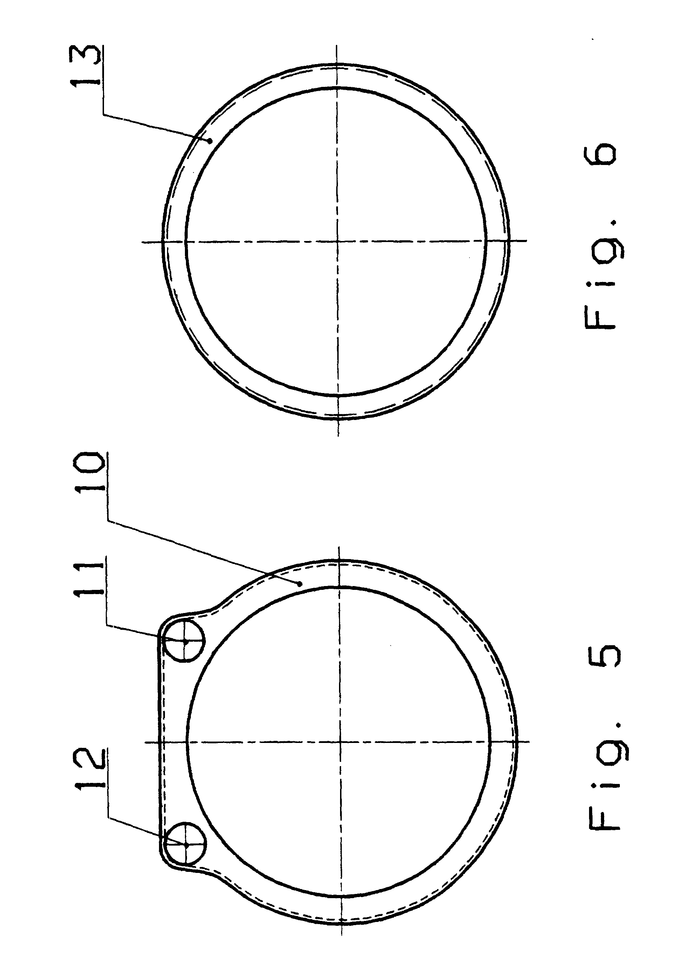

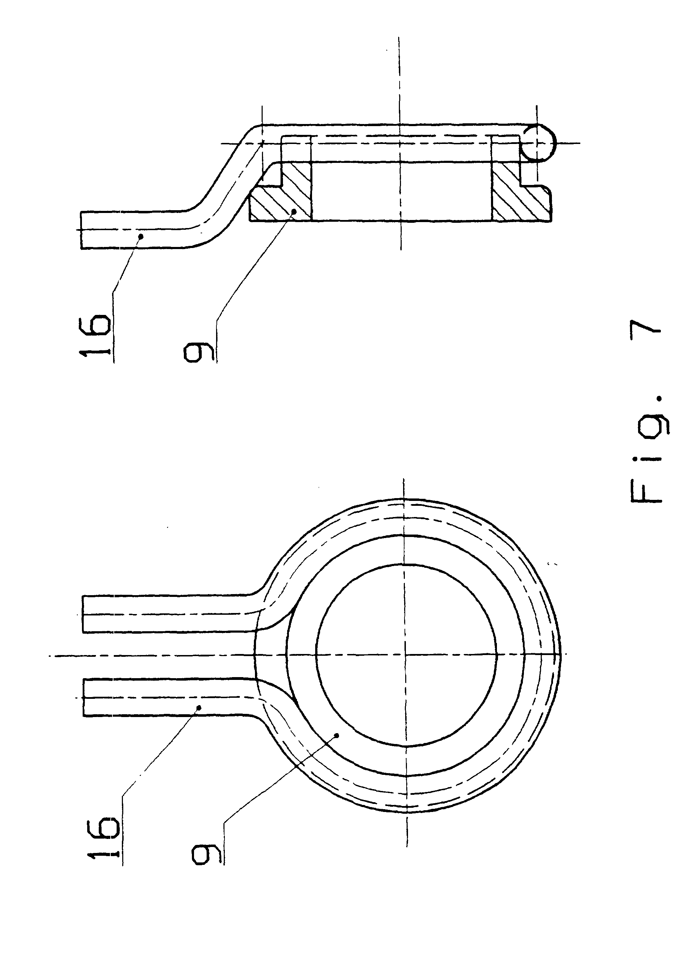

Um einen geschlossenen Kreislauf der Kühlflüssigkeit realisieren zu können, müssen die Ringkanalsegmente 7a-7c, 8a-8d an beiden Seiten des Motorgehäuses abgedeckt werden. Dies kann mit Hilfe entsprechend geformter Deckel geschehen. Fig. 5 zeigt einen Ring 10 zur Abdeckung der Ringkanalsegmente 8a-8d entsprechend Fig. 4. Der Ring 10 besitzt eine Zuführungs-Öffnung 11, durch welche die Kühlflüssigkeit zugeführt wird, von wo es über das Ringkanalsegment 8a in die Kühlkanäle 6 gelangt. Nach dem mäanderförmigen Verlauf gelangt die Kühlflüssigkeit schließlich in das Ringkanalsegment 8d und wird über eine Abführungs-Öffnung 12 in das Reservoir der Kühlflüssigkeit abgeleitet. Der Ring 10 kann auch ohne Öffnungen 11, 12 hergestellt werden und die Kühlflüssigkeit über Öffnungen 14, 15 (siehe Fig. 4) am Gehäuse 1 zu- und abgeführt werden. Fig. 6 zeigt einen Ring 13 zur Abdeckung der Ringkanalsegmente 7a-7c entsprechend Fig. 3. Die Ringe 10, 13 werden vorzugsweise aus dem selben Material wie das Gehäuse 1 hergestellt und auf diesem befestigt. vorzugsweise aufgeschweißt.

Fig. 7 zeigt eine Ausführungsform des erfindungsgemäßen ringförmigen Kühlkanals 16 zur Führung der Kühlflüssigkeit zur Kühlung der Lager der Maschine samt Lagerring 9. Die beiden Öffnungen des den ringförmigen Kühlkanal 16 bildenden Rohres sind so angeordnet, daß sie in den Ringkanalsegmenten 8a und 8d münden und somit der ringförmige Kühlkanal 16 parallel zu den Kühlkanälen 6 von der Kühlflüssigkeit durchströmt wird. Der Lagerring 9 dient zur Verstärkung des Lagerschildes im Lagerbereich der elektrischen Maschine. Dieser Lagerring 9 wird mit dem Rohr des ringförmigen Kühlkanals 16 verbunden, vorzugsweise verschweißt. Bei einem durch Gießen hergestellten Gehäuse 1 wird das, den Kühlkanal 16 bildende Rohr in die Gußform eingelegt und das Gehäuse 1 um dieses, so wie um die, die Kühlkanäle 6 bildenden Rohre gegossen. Dabei muß das Rohr bzw. der Kühlkanal 16 nicht unbedingt ringförmig gestaltet sein, obgleich dadurch die beste Kühlung des Lagerbereichs erzielt wird. Durch die Kühlung des Lagers der elektrischen Maschine kann die Leistungsausbeute weiter erhöht werden.

Zur Innenkühlung der elektrischen Maschine sind im integrierten Lagerschild des Gehäuses 1 Kühlrippen 17 angeordnet (Fig. 1 und Fig. 3). Im Betrieb ruft der rotierende Kurzschlußring des Elektromotors eine Luftströmung hervor, welche über die gekühlten Rippen 17 geführt wird. Dadurch kann eine gesteigerte Kühlung auch im Inneren des Gehäuses 1 erzielt werden. Eine noch bessere Innenkühlung wird erreicht, wenn die Kühlrippen 17 so angeordnet sind, daß jede zweite Kühlrippe 17 kürzer gestaltet ist und in einem Ring 18 endet. Dadurch kann eine gezielte Strömung der Luft und somit eine bessere Wärmeabgabe realisiert werden.

Die Erfindung ist nicht auf das Gehäuse eines Elektromotors, insbesondere eines Traktionsmotors, wie es in den Abbildungen dargestellt ist, beschränkt, sondern kann auf beliebige flüssigkeitsgekühlte elektrische Maschinen mit Gehäuse angewendet werden.

## Patentansprüche

1. Flüssigkeitskühlung für elektrische Maschinen mit einem Gehäuse mit Kühlkanälen (6, 16), welche durch Rohre aus einem Material mit höherem Schmelzpunkt als das Material des Gehäuses
(1) gebildet sind, und mit dem Gehäuse (1) in einem Arbeitsvorgang durch Gießen oder Sintern hergestellt sind, wobei Kühlkanäle (6) im Mantel des Gehäuses (1) angeordnet sind, dadurch gekennzeichnet, dass im Gehäuse (1) ein Lagerschild integriert ist, welches mit diesem in einem Arbeitsvorgang hergestellt ist, und dass im Lagerschild zumindest ein Kühlkanal (16) angeordnet ist.

2. Flüssigkeitskühlung nach Anspruch 1, dadurch gekennzeichnet, dass die Kühlkanäle (6) mit ihren Enden in Ringkanalsegmenten (7, 7a-7c, 8, 8a-8d) münden und die Ringkanalsegmente (7, 7a-7c) auf der einen Seite der Kühlkanäle (6) gegenüber den Ringkanalsegementen (8, 8a-8d) auf der anderen Seite der Kühlkanäle (6) winkelversetzt sind und die Kühlflüssigkeit über ein Ringkanalsegment (8a) zuführbar und über ein anderes Ringkanalsegment (8d) abführbar ist, sodaß die Kühlflüssigkeit in den Kühlkanälen mäanderförmig verläuft.

3. Flüssigkeitskühlung nach Anspruch 1 oder 2, dadurch gekennzeichnet, dass im Lagerschild ein ringförmiger Kühlkanal (16) um das Lager angeordnet ist.

4. Flüssigkeitskühlung nach Anspruch 3, dadurch gekennzeichnet, dass die Enden des Kühlkanals (16) in zwei getrennten Ringkanalsegmenten (8a, 8d) münden und der Kühlkanal (16) von der Kühlflüssigkeit durchströmt ist.

5. Flüssigkeitskühlung nach Anspruch 4, dadurch gekennzeichnet, dass das den Kühlkanal (16) im Lagerschild bildende Rohr mit einem Lagerring (9) verbunden, vorzugsweise verschweißt ist.

6. Flüssigkeitskühlung nach Anspruch 3 bis 5, dadurch gekennzeichnet, dass im Gehäuse (1) im Bereich des integrierten Lagerschildes innen Kühlrippen (17) in radialer Richtung angeordnet sind.

7. Flüssigkeitskühlung nach Anspruch 6, dadurch gekennzeichnet, dass einzelne der inneren Kühlrippen (17) länger als die anderen Kühlrippen (17) ausgebildet sind und in einem Ring (18) enden.

8. Flüssigkeitskühlung nach Anspruch 7, dadurch gekennzeichnet, dass jede zweite innere Kühlrippe (17) länger als die anderen Kühlrippen (17) ausgebildet sind und in einem Ring (18) enden.

9. Flüssigkeitskühlung nach mindestens einem der Ansprüche 1 bis 8, dadurch gekennzeichnet, dass alle Anbauteile, wie z.B. Motoraufhängung (3), Klemmenkasten (4), Verstärkungs- bzw. Kühlrippen (5) und dgl. im Gehäuse (1) integriert sind und mit diesem in einem Arbeitsvorgang hergestellt sind.

## Claims

1. A liquid cooling system for electrical machines comprising a housing with cooling channels (6, 16) formed by pipes made of a material having a higher melting point than the material of the housing (1), and which are produced with the housing (1) in one procedure by casting or sintering, the cooling channels (6) being arranged in the jacket of the housing (1), characterised in that a bearing shield is integrated in the housing (1) which is produced in one procedure therewith and that at least one cooling channel (16) is arranged in said bearing shield.

2. A liquid cooling system according to claim 1, characterised in that the cooling channels (6) have ends ending in annular channel segments (7, 7a-7c, 8, 8a-8d) and the annular channel segments (7, 7a-7c) on the one side of the cooling channels (6) are angularly offset relative to the annular channel segments (8, 8a-8d) on the other side of the cooling channels (6) and that the cooling liquid is suppliable via an annular channel segment (8a) and drainable via a different annular channel segment (8d), the cooling liquid thus moving meander-like in said cooling channels.

3. A liquid cooling system according to claim 1 or 2, characterised in that an annular cooling channel (16) is arranged in the bearing shield to extend around this bearing.

4. A liquid cooling system according to claim 3, characterised in that the ends of the cooling channel (16) end in two separate annular channel segments (8a, 8d) and that the cooling channel (16) is flowed through by the cooling liquid.

5. A liquid cooling system according to claim 4, characterised in that the pipe forming the cooling channel (16) in the bearing shield is connected with a bearing ring (9), preferably welded thereto.

6. A liquid cooling system according to claims 3 to 5, characterised in that in the housing (1), in the region of the integrated bearing shield, internal cooling ribs (17) are arranged in radial direction.

7. A liquid cooling system according to claim 6, characterised in that individual ones of the inner cooling ribs (17) are longer than the other cooling ribs (17) and end in a ring (18).

8. A liquid cooling system according to claim 7, characterised in that every other inner cooling rib (17) is configured to be longer than the other cooling ribs (17) and ends in a ring (18).

9. A liquid cooling system according to at least one of claims 1 to 8, characterised in that all attachments, such as, e.g., the engine suspension device (3), terminal box (4), reinforcing ribs and cooling ribs (5), respectively, and the like are integrated in the housing 1 and produced with the latter in one working procedure.

## Revendications

1. Refroidissement hydraulique pour machine électrique avec un boîtier comportant des canaux de refroidissement (6, 16), qui sont formés par des conduits en un matériau avec un point de fusion plus élevé que celui du matériau du boîtier (1) et qui sont fabriqués avec le boîtier (1) en une étape par moulage ou par frittage, les canaux de refroidissement étant agencés dans l'enveloppe du boîtier (1), caractérisé en ce que une flasque est intégrée dans le boîtier (1), ladite flasque étant fabriquée en une étape avec ledit boîtier (1), et en ce que, dans la flasque, au moins un canal de refroidissement (16) est agencé.

2. Refroidissement hydraulique selon la revendication 1, caractérisé en ce que les canaux de refroidissement (6) débouchent avec leurs extrémités dans des segments de canal annulaire (7, 7a-7c, 8, 8a-8d), les segments de canal annulaire (7, 7a-7c) situés sur l'une des faces des canaux de refroidissement (6) sont décalés angulairement par rapport au segment de canal annulaire (8, 8a-8d) situé sur l'autre face des canaux de refroidissement (6), le liquide de refroidissement étant amené par un segment de canal annulaire (8a) et étant évacué par un autre segment de canal annulaire (8d), de manière que le liquide de refroidissement circule dans les canaux de refroidissement en forme de méandres.

3. Refroidissement hydraulique selon la revendication 1 ou 2, caractérisé en ce que un canal de refroidissement (16) en forme d'anneau est agencé dans la flasque autour du support.

4. Refroidissement hydraulique selon la revendication 3, caractérisé en ce que les extrémités du canal de refroidissement (16) débouchent en deux segments de canal annulaire (8a, 8d) séparés, le canal de refroidissement (16) étant traversé par le liquide de refroidissement.

5. Refroidissement hydraulique selon la revendication 4, caractérisé en ce que le conduit formant le canal de refroidissement (16) dans la flasque est relié, de préférence soudé, avec un anneau de support (9).

6. Refroidissement hydraulique selon l'une des revendications 3 à 5, caractérisé en ce que des ailettes de refroidissement (17) internes sont agencées dans une direction radiale dans le boîtier (1) dans la zone de la flasque intégrée.

7. Refroidissement hydraulique selon la revendication 6, caractérisé en ce que quelques unes des ailettes de refroidissement internes (17) sont formées plus longues que les autres ailettes de refroidissement (17), et se terminent dans un anneau (18).

8. Refroidissement hydraulique selon la revendication 7, caractérisé en ce qu'une ailette de refroidissement (17) interne sur deux est formée plus longue que les autres ailettes de refroidissement et se termine dans un anneau.

9. Refroidissement hydraulique selon au moins une des revendications 1 à 8, caractérisé en ce que toutes les pièces, comme par exemple la suspension du moteur (3), la boîte de connexion (4), les nervures (5) de refroidissement respectivement de renforcement ou similaires, sont intégrées dans le boîtier et sont fabriquées avec celui-ci en une étape.
